# EUROPEAN PATENT SPECIFICATION

(11) **EP 2 580 034 B1**
(45) Date of publication and mention of the grant of the patent: **26.09.2018**
(21) Application number: 11726297.2
(22) Date of filing: 09.06.2011
(51) Int. Cl.: B27B 5/20, B27B 5/29

(54) **A LOCKING CONSTRUCTION FOR A MITER SAW HAVING A HINGED LINEAR GUIDE MECHANISM**
VERRIEGELUNGSKONSTRUKTION FÜR EINE GEHRUNGSSÄGE MIT LINEAREM FÜHRUNGSMECHANISMUS MIT DREHGELENK
CONSTRUCTION DE VERROUILLAGE DESTINÉE À UNE SCIE À ONGLET DOTÉE D'UN MÉCANISME DE GUIDAGE LINÉAIRE ARTICULÉ

(30) Priority: 09.06.2010 US 797043
(43) Date of publication of application: 17.04.2013
(73) Proprietor: Robert Bosch GmbH, 70442 Stuttgart (DE)
(72) Inventor: LIU, Jie, Lisle IL 60532 (US); PIERGA, Al, Barrington IL 60010 (US)
(74) Representative: Isarpatent
(86) International application number: PCT/US2011/039820
(87) International publication number: WO 2011/156616

(56) References cited:
- US-A- 1 763 244
- US-A- 2 569 354
- US-A- 2 664 924
- US-A- 4 011 782
- US-A1- 2007 137 452

## Description

### BACKGROUND OF THE INVENTION

The present invention generally relates to power tools, and particularly power miter saws according to the preamble of claim 1 which is known from US 2007/137 452 A1.

Power miter saws continue to be the subject of research and developmental efforts that are improving the design and operation of such saws. The improved design also improves the accuracy of cuts that are made by the miter saw as well as provide durable and stable operation over an extended useful life. In addition, increased functionality is provided at very little additional cost to the consumer, including the capability of the miter saw to have the blade and motor assembly traverse a generally horizontal path to increase the width of a cut made on a work piece or to cut larger scale crown molding and other trim work that is performed by trim carpenters and other tradesmen.

Recent developments that have been made by inventors with the Robert Bosch Tool Company utilize horizontal linkages that are combined with transverse linkages which enable such reciprocating movement to have a high degree of stability which contributes to extreme accuracy in the making of cuts on work pieces. Not only that, the use of such linkages eliminates sliding bushings and the like which are relatively more expensive and are prone to having their operability at least partially compromised by exposure to dust, wood cuttings and the like during operation.

### SUMMARY OF THE INVENTION

According to the invention a power miter saw comprises a saw base, a table rotatably connected to the saw base, a miter arm assembly for angularly positioning the table relative to the saw base, a saw blade and motor assembly operatively connected to the table, a multiple link hinged linear guide mechanism configured to support the saw blade and motor assembly and enable movement of the assembly along a predetermined linear generally horizontal path between extended and retracted positions, the mechanism comprising a first hinge having first and second links pivotably connected together by a first shaft extending through aligned openings therein, the first link being pivotably connected with the assembly by a second shaft and the second link being pivotably connected to the table by a third shaft, the first, second and third shafts being parallel to one another, the second link having at least one outwardly extending mounting tab adjacent the first shaft, and a locking lever having a handle and a locking blade at opposite end portions and a pivot portion with a pivot connection therebetween for pivotably mounting the lever to the tab, the blade being configured to fit within a gap between adjacent surfaces of the first and second links when the guide mechanism is in one of its extended or retracted positions and the lever is moved into a locked position.

### DESCRIPTION OF THE DRAWINGS

FIGURE 1 is a left rear perspective view of a power miter saw incorporating a preferred embodiment of the present invention, and particularly illustrating a power miter saw that has a linear guide mechanism that permits reciprocating movement of its blade and motor assembly along a generally horizontal path, with the mechanism and assembly being shown in their extended position;
FIG. 2 is an enlarged perspective view of the power miter saw shown in FIG. 1, particularly illustrating portions of the linear guide mechanism and a locking lever, with the linear guide mechanism and the assembly in their retracted position and the locking lever in an unlocked position;
FIG. 3 is another perspective view of power miter saw, nearly identical to FIG. 2, except with the locking lever in a locked position;
FIG. 4 is a left front perspective view, similar to FIGS. 2 and 3, but illustrating a larger portion of the linear guide mechanism shown in its extended position, with the locking lever in its unlocked position;
FIG. 5 is another perspective view of power miter saw, nearly identical to FIG. 4, except with the locking lever in its locked position;
FIG. 6 is a top view of a portion of the linear guide mechanism in its retracted position and the locking lever in its locked position
FIG. 7 is a top view of a portion of the linear guide mechanism in its extended position and the locking lever in its locked position;
FIG. 8 is a side view of the locking lever;
FIG. 9 is a left end view of the locking lever as shown in FIG. 8; and
FIG. 10 is a perspective view of a spring clip that can be used in an alternative embodiment of the present invention.

### DETAILED DESCRIPTION

Embodiments of the present invention are disclosed which are directed to a power miter saw that has a base, a rotatable table, a miter arm assembly for angularly positioning the table relative to the base, a saw blade and motor assembly that is operatively connected to the table as well as a multiple hinged linear guide mechanism that is configured to have the saw blade and motor assembly move in a generally horizontal path so that work pieces that are placed on the table that have a width that exceeds the normal width of cutting that can be accomplished by merely moving the blade downwardly into the cutting position. The movement in the horizontal path enables a much wider work piece to be cut.

With the capability of the linear guide mechanism to move the saw blade and motor assembly between fully extended and fully retracted positions, the size capacity of work pieces that can be cut by the saw is increased as described above. However, there is a desirability for locking guide mechanism in its fully retracted position for performing chop cuts where the horizontal movement along the path is unnecessary. It is also desirable to lock it in its fully extended position for transporting the miter saw to and from a jobsite, for example.

The embodiments of the present invention include a locking lever that is configured to cooperate with features of the linear guide mechanism which are also part of the embodiments of the present invention, for locking the linear guide mechanism in either its extended or retracted position. The locking lever is operative in an intuitive, easy to use manner and is extremely reliable, inexpensive to manufacture and in connection with the features of the linear guide mechanism, elegant in its design simplicity.

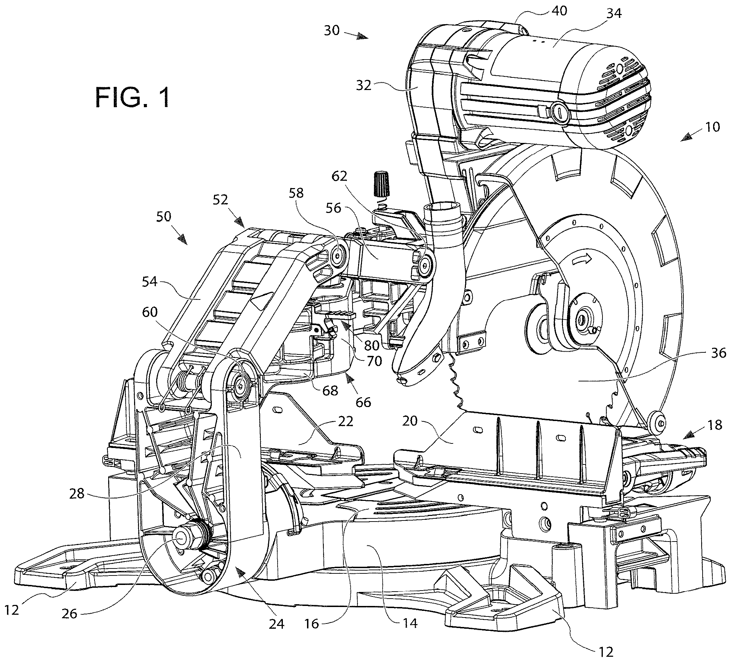

Turning now to the drawings, and particularly FIG. 1, a miter saw, indicated generally at 10, is illustrated and includes a base 12, a rotatable table 14 that has a top surface 16 upon which a work piece can be placed. The table 14 is pivotably connected to the base 12 for rotation, the rotation of which is controlled by a miter arm assembly, indicated generally at 18. The miter arm assembly 18 generally has the capability of having a quick release for placing the table at an appropriate desired angle so that miter cuts as desired can be made and also has a knob which can be tightened to lock the table in a desired position to cut a particular miter angle. The miter saw 10 preferably has left and right adjustable fence portions 20 and 22, respectively, for holding a work piece in a desired position.

The table 14 has a rear bevel adjustment structure, indicated generally at 24, which has a generally horizontal shaft 26 about which a generally vertical extension blasting 28 can be rotated about the shaft 26. The saw 10 includes a saw blade and motor assembly, indicated generally at 30, which includes a housing 32, which includes a motor 34, with the housing 32 including a gear mechanism (not shown) that drives a blade 36. The housing also has a head structure which includes a generally horizontal shaft (not shown) about which the blade and motor assembly can be rotated from an elevated rest position downwardly into a cutting position. A handle 40 is used by an operator to pull the blade and motor assembly downwardly in a cutting position and is preferably biased upwardly toward its rest position.

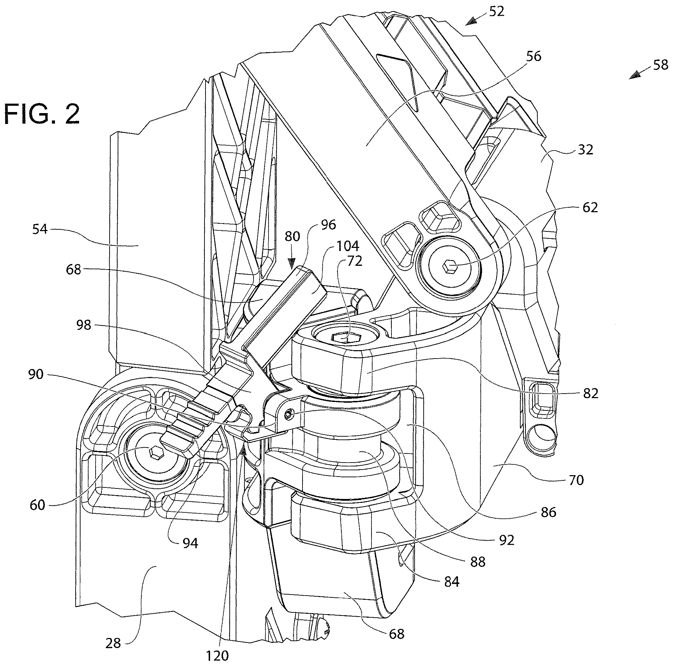

The saw 10 includes a multiple link hinged linear guide mechanism, indicated generally at 50, shown in FIGS. 1-5, with FIGS. 2-5 showing the guide mechanism in an enlarged manner. The linear guide mechanism 50 includes a horizontal hinge, indicated generally at 52, comprised of links 54 and 56 which are pivotably connected together by pivot connection 58 that preferably comprises a shaft that is seated in bearings or the like in a manner that substantially eliminates any play in the pivot connection and thereby provides a high degree of accuracy during operation.

The link 54 is also pivotably connected to the extension casting 28 by a pivot connection 60 and the link 56 is connected to the head structure of blade and motor assembly housing 32 by a pivot connection 62. The pivot connections 58, 60 and 62 are parallel to one another and are generally horizontal in their orientation relative to the table top 16 when the bevel setting is zero, i.e., the extension 28 is also perpendicular to the table top 64.

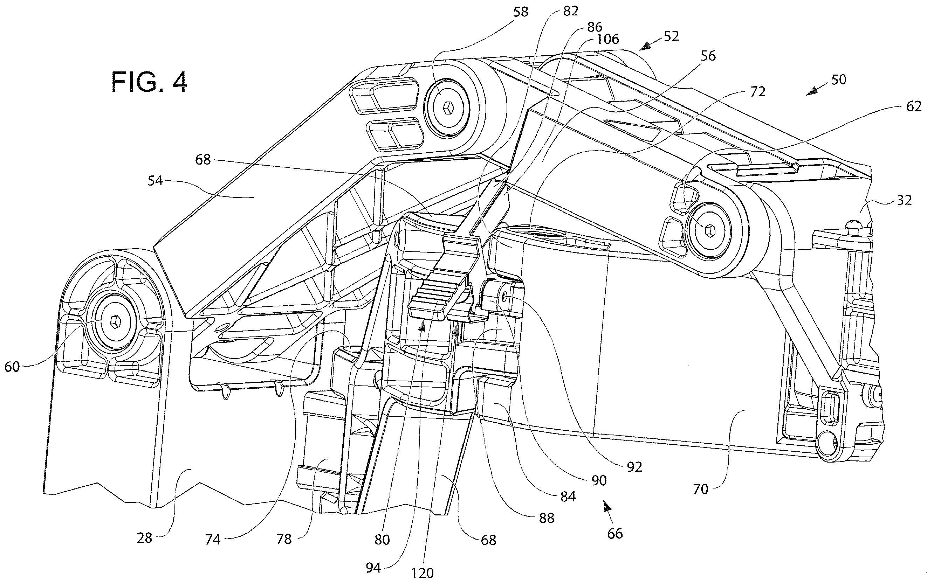

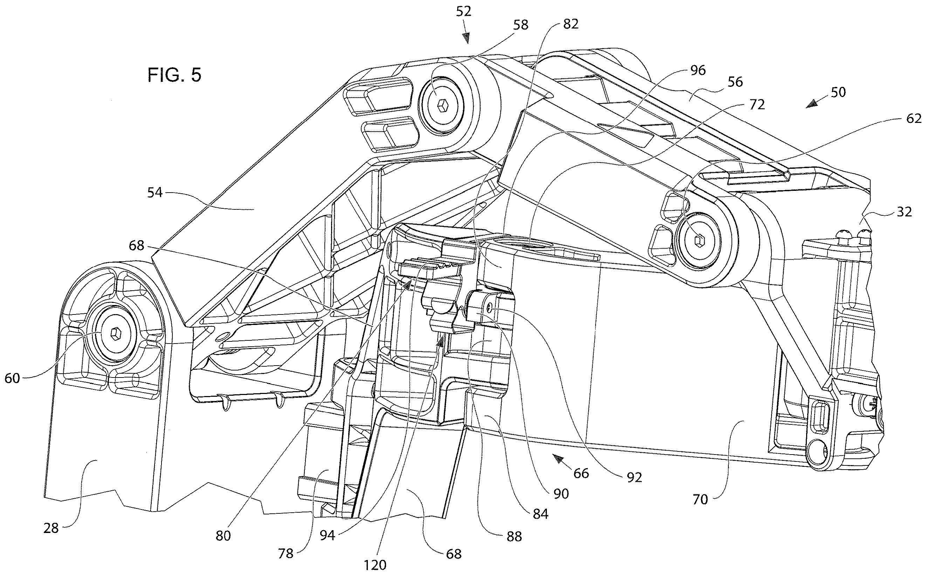

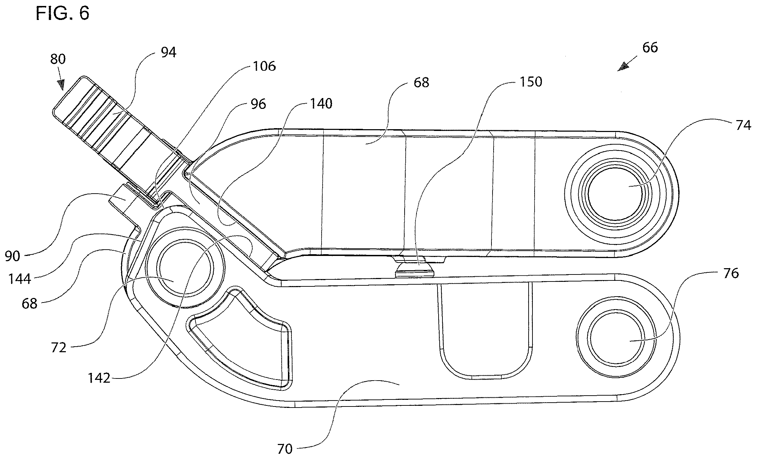

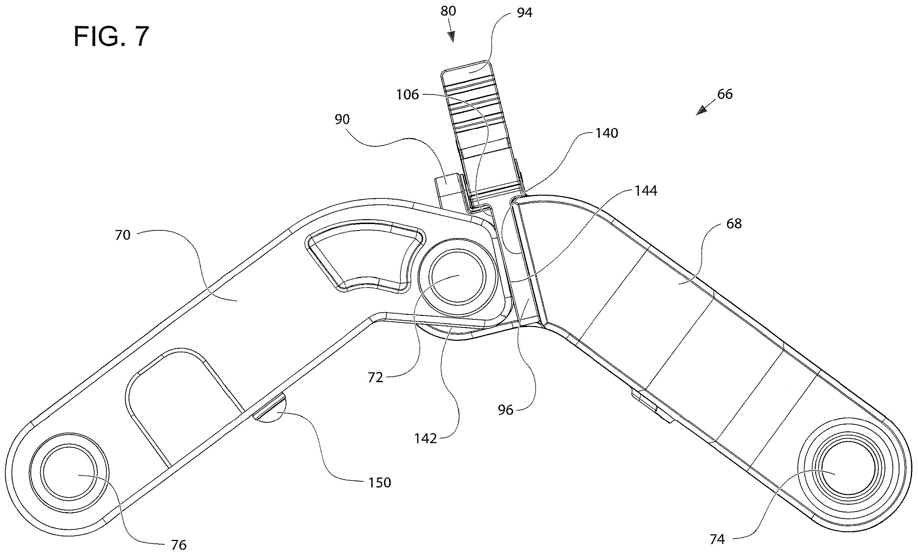

The linear guide mechanism 50 also includes a vertical hinge, indicated generally at 66, which includes links 68 and 70 that are connected together by pivot connection 72 with the link 68 also being connected to the extension casting 28 by pivot connection 74 and the link 70 is connected to the housing 32 by pivot connection 76 as best shown in FIGS. 6 and 7. The three pivot connections 72, 74 and 76 are parallel to one another and are generally vertically oriented and also perpendicular to the orientation of the pivot connections 58, 60 and 62 of the horizontal hinge 52. The pivot connection 74 connects the links 68 to a bracket 78 that is formed with the extension casting 28 as best shown in FIG. 4 and 5.

All of the pivot connections of the linear guide mechanism are preferably shafts that are journaled in bearings in a configuration whereby there is virtually no play in the joints which would result in anything but pivotal movement of the links relative to one another or to structure to which they are attached so that the stability of the miter saw is excellent which results in accuracy of the cuts that are made by the saw.

As should be understood from the interaction of the horizontal and vertical hinges 52 and 66, the linear guide mechanism 50 causes the shaft 62 to move in a linear path that is preferably substantially parallel to the plane of the table top 16. The linear guide mechanism 50 enables the blade and motor assembly to be moved from its extended position as shown in FIGS. 1, 4 and 5 where the blade is moved to the right of the fence as shown in FIG. 1 to a retracted position as shown in FIGS. 2, 3 and 6 where the blade is in position to desirably perform chop cuts on work pieces that are placed in abutting contact with the fence 20, 22.

As previously mentioned, it is desirable to have a miter saw with the reciprocating movement capability as has been described with regard to the saw 10. It is also desirable to be able to lock the linear guide mechanism in its retracted position where chop cuts are made by a user and the linear guide mechanism does not "roll out" from the cutting position. In keeping with the present invention, a locking lever, indicated generally at 80, is provided, which together with the configuration of the links 68 and 70 of the vertical hinge 66 enables the linear guide mechanism to be locked in either of its extended or retracted positions. In this regard, the locking lever 80 is pivotably mounted to the link 68 and can be moved between locked position as shown in FIGS. 1, 3, 5, 6 and 7 or an unlocked position as shown in FIGS. 2 and 4.

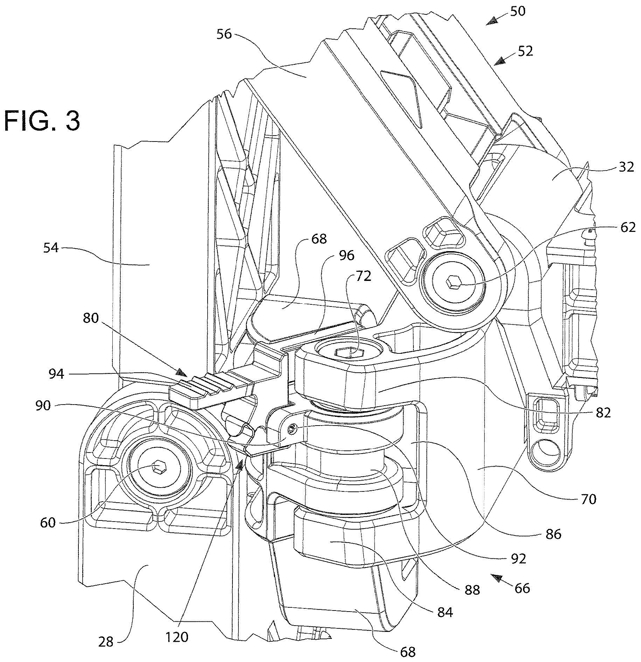

When the locking lever 80 is in its locked position, it fits within two adjacent gapped surfaces of links 68 and 70 which prevents the pivot connection 72 from pivoting. The configuration of the links near the pivot connection 72 is important. Referring initially to FIG. 2 and 3, it is shown that the link 70 has upper and lower end portions 82 and 84 with a recess 86 therebetween in which a tongue portion 88 of the link 68 fits. It should be apparent that the pivot connection 72 fits within openings in the upper and lower end portions as well as the tongue portion 88 to define the pivot connection.

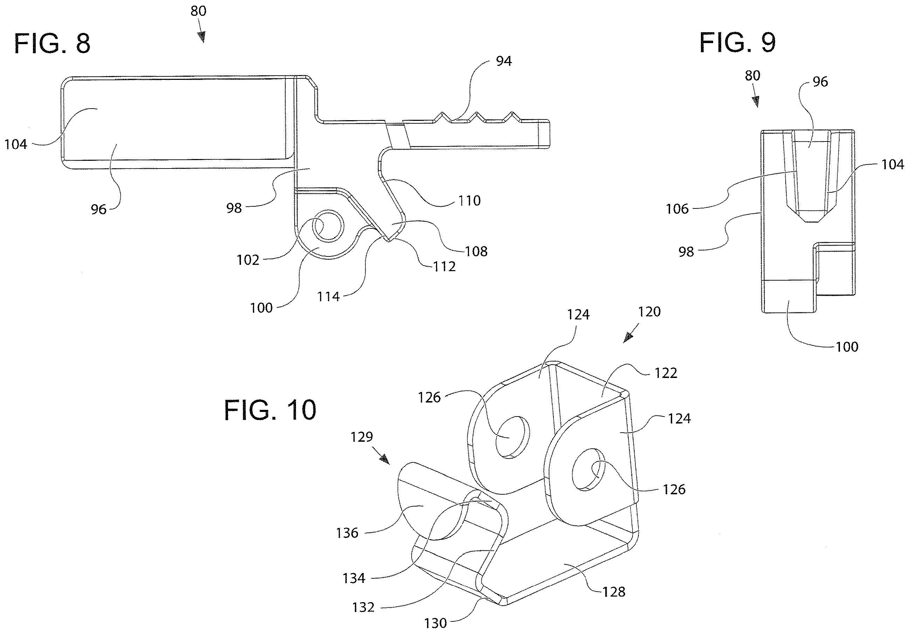

The link 68 has an outwardly extending tab portion 90 that has an aperture 92 therein for receiving a pin or bolt 92 for providing a pivot connection to the locking lever 80. The locking lever 80 is shown in detail in FIGS. 8 and 9 and has a handle portion 94 at its right end thereof, a locking blade 96 at the left end portion thereof and a pivot portion 98 between the handle and blade 94 and 96. The pivot portion 98 has a lower portion 100 with a reduced thickness in which a nut for a bolt used to interconnect the locking lever 80 with the tab 90 can reside without extending beyond the outermost surface of the portion 98.

The blade portion 96 has opposite faces 104 and 106 which are slightly inclined to more easily be rotated into locking engagement and to compensate for variation in gap width. The pivot portion 98 also has a stop extension 108 with a back surface 110, an end surface 112 and a stop surface 114 which is configured to prevent the locking lever from rotating more than approximately 40° when it is in its unlocked position as shown in FIG. 2, for example. The mass of the blade portion 96 relative to the pivot portion 98, as best shown in FIG. 9, enables the design of the locking lever to be such that the center of gravity prevents the locking lever 80 from engaging due to gravity when it is in the disengaged or unlocked position.

Alternative embodiments can utilize a spring clip 120 such as is shown in detail in FIG. 10 and also in FIGS. 2-5. The clip includes a base portion 122 having side wings 124 with apertures 126 which are configured to be spaced apart to enable the locking lever 80 to fit between the wings 124 and be held in place by the pin or bolt that interconnects the locking lever 80 with the tab 90. The clip 120 has a forward extension 126 and a clamping portion, indicated generally at 128, that includes angled surfaces 130, 132, 134 and 136 for engaging the surfaces 108, 110, 112 and 114 of the pivot portion 98 of the locking lever 80. For example, as shown in FIG. 2, when the locking lever 80 is in its disengaged or unlocked position, it is apparent that the inside surfaces of portions 132 and 134 of the clip 120 are in contact with the back surface 110 of the pivot portion 98 of the locking lever 80. Also, as is evident from FIG. 3, when the locking lever is in its locked position, the surface 134 of the clip 120 is contacting the end surface 112 of the pivot portion 98 of the locking lever 80. The spring clip 120 is preferably configured to require an operator to impose a force significantly greater than gravity to engage and disengage the locking lever 80.

As previously mentioned, the configuration of the links 68 and 70 is designed to interact with the locking lever 80 to lock the linear guide mechanism 50 in either its extended or retracted positions. This is best shown in FIGS. 6 and 7 which is a top view of the links 68 and 70 together with the locking lever 80 shown in its locked position, with FIG. 6 showing it being locked in the retracted position and FIG. 7 in its extended position. The link 68 which has the tab 90 upon which the locking lever 80 is pivotably connected has a surface 140 that is configured to engage the surface 104 of the blade portion 96 whether it is locked in the extended or the retracted position.

When it is in the retracted position and referring to FIG. 6, the surface 106 of the blade 96 is positioned to engage a surface 142 of the link 70. The distance between the adjacent surfaces 140 and 142 defines a gap that is generally slightly smaller than the thickness of the blade portion 96 at its maximum dimension, i.e., at the top of the blade portion 96 as shown in FIG. 9. When the linear guide mechanism is placed in its extended position, and referring to FIG. 7, then a surface 144 is positioned to contact the surface 106 of the locking lever 80.

A rubber bumper 150 may be provided which as shown in FIG. 6 would tend to urge the links 68 and 70 apart which would apply some degree of compression of the blade 96 to hold it in a locked position if the embodiment did not include a spring clip 120.

While various embodiments of the present invention have been shown and described, it should be understood that other modifications, substitutions and alternatives are apparent to one of ordinary skill in the art. Such modifications, substitutions and alternatives can be made without departing from the scope of the appended claims.

## Claims

1. A power miter saw (10) comprising:
a saw base (12);
a table (14) rotatably connected to said saw base;
a miter arm assembly (18) for angularly positioning said table relative to said saw base;
a saw blade and motor assembly (30) operatively connected to said table;
a multiple link hinged linear guide mechanism (50) configured to support said saw blade and motor assembly and enable movement of said assembly along a predetermined linear generally horizontal path between extended and retracted positions, said mechanism comprising a first hinge (66) having first (70) and second (68) links pivotably connected together by a first shaft (72) extending through aligned openings therein, said first link (70) being pivotably connected with said assembly (18) by a second shaft (76) and said second link (68) being pivotably connected to said table (14) by a third shaft (74), said first, second and third shafts being parallel to one another;
**characterised by**
said second link having at least one outwardly extending mounting tab (90) adjacent said first shaft;
a locking lever (80) having a handle (94) and a locking blade (96) at opposite end portions and a pivot portion (98) with a pivot connection therebetween for pivotably mounting said lever to said tab, said blade being configured to fit within a gap between adjacent surfaces (140, 142, 144) of said first and second links when said guide mechanism is in one of its extended or retracted positions and said lever is moved into a locked position.

2. A power miter saw as defined in claim 1 wherein said locking blade (96) is elongated with first (104) and second (106) sides and maximum thickness that is slightly bigger than the width of said gap, said first side generally contacting a first contacting surface (140) of said second link (68) which defines one side of said gap, said second side (106) of said locking blade being configured to contact a second contacting surface (142) on said first link (70) when said guide mechanism is in its retracting position and a third contacting surface (144) on said first link when said guide mechanism is in its extended position.

3. A power miter saw as defined in claim 2 wherein said second (142) and third (144) contacting surfaces are at a predetermined angle relative to one another as measured relative to said first shaft (72) orientation.

4. A power miter saw as defined in claim 3 wherein said predetermined angle is in the range of about 60 degrees to about 90 degrees.

5. A power miter saw as defined in claim 1 wherein said adjacent surfaces (140, 142, 144) of said first (70) and second (68) links when said guide mechanism is in one of its extended or retracted positions are generally parallel to one another.

6. A power miter saw as defined in claim 1 wherein said linear guide mechanism further comprising a second hinge (52) having third and fourth links (54, 56) pivotably connected together by a fourth shaft (58) extending through aligned openings therein, said third link being pivotably connected with said assembly by a fifth shaft (62) and said fourth link being pivotably connected to said table by a sixth shaft (60), said fourth, fifth and sixth shafts being parallel to one another and generally perpendicular to said first, second and third shafts.

7. A power miter saw as defined in claim 2 wherein said first link (70) has spaced apart end portions (82, 84) with said aligned openings for connection to said second link (68) by said first shaft, said second link having an end portion (88) with an aligned opening that fits within said spaced apart end portions, said first link having said second and third contacting surfaces (142, 144) on at least one of said spaced apart end portions.

8. A power miter saw as defined in claim 1 further comprising a spring clip (120) for biasing said lever in either its locked position or an unlocked position.

9. A power miter saw as defined in claim 8 wherein said pivot portion (98) of said locking lever (80) has an outwardly extending tab portion configured to engage said spring clip (120) and resiliently hold said locking lever in either its locked or unlocked position.

10. A power miter saw as defined in claim 9 wherein said spring clip has a pair of spaced apart mounting wings (124) with openings (126) therein for mounting said clip to said first link at said locking lever pivot connection.

## Patentansprüche

1. Motorbetriebene Gehrungssäge (10), umfassend:
eine Sägebasis (12),
einen Tisch (14), der mit der Sägebasis drehbar verbunden ist,
eine Gehrungsarmanordnung (18) zum winkelmäßigen Positionieren des Tischs relativ zu der Sägebasis,
eine Sägeblatt- und Motoranordnung (30), die mit dem Tisch wirkverbunden ist,
einen mit Mehrfachlenkerscharnieren versehenen Führungsmechanismus (50), der ausgestaltet ist, um die Sägeblatt- und Motoranordnung zu tragen und eine Bewegung der Anordnung entlang eines vorbestimmten, linearen, im Allgemeinen horizontalen Wegs zwischen ausgefahrenen und eingezogenen Positionen zu ermöglichen, wobei der Mechanismus ein erstes Scharnier (66) mit einem ersten (70) und zweiten (68) Lenker umfasst, die miteinander durch eine erste Welle (72) verbunden sind, die sich durch ausgerichtete Öffnungen darin erstreckt, wobei der erste Lenker (70) schwenkbar mit der Anordnung (18) durch eine zweite Welle (76) verbunden ist und der zweite Lenker (68) schwenkbar mit dem Tisch (14) durch eine dritte Welle (74) verbunden ist, wobei die erste, zweite und dritte Welle parallel zueinander sind,
**gekennzeichnet durch**
den zweiten Lenker, der mindestens eine sich nach außen erstreckende Montagelasche (90) hat, die benachbart zu der ersten Welle ist,
einen Sperrhebel (80), der einen Griff (94) und ein Sperrblatt (96) an gegenüberliegenden Endabschnitten und einen Schwenkabschnitt (98) mit einer Schwenkverbindung
dazwischen zum schwenkbaren Montieren des Hebels an der Lasche hat, wobei das Blatt ausgestaltet ist, um innerhalb einer Lücke zwischen benachbarten Flächen (140, 142, 144) des ersten und zweiten Lenkers zu sitzen, wenn der Führungsmechanismus in einer seiner ausgefahrenen und eingezogenen Position ist und der Hebel in eine gesperrten Position bewegt wird.

2. Motorbetriebene Gehrungssäge nach Anspruch 1, wobei das Sperrblatt (96) länglich ist, mit einer ersten (104) und zweiten (106) Seite und einer maximalen Dicke, die geringfügig größer ist als die Breite der Lücke, wobei die erste Seite im Allgemeinen eine erste Kontaktfläche (140) des zweiten Lenkers (68) berührt, der eine Seite der Lücke definiert, wobei die zweite Seite (106) des Sperrblatts ausgestaltet ist, um eine zweite Kontaktfläche (142) auf dem ersten Lenkers (70), wenn der Führungsmechanismus in seiner eingezogenen Position ist, und eine dritte Kontaktfläche (144) auf dem ersten Lenker, wenn der Führungsmechanismus in seiner ausgefahrenen Position ist, zu berühren.

3. Motorbetriebene Gehrungssäge nach Anspruch 2, wobei die zweite (142) und dritte (144) Kontaktfläche in einem vorbestimmten Winkel relativ zueinander sind, wenn relativ zu der Ausrichtung der ersten Welle (72) gemessen wird.

4. Motorbetriebene Gehrungssäge nach Anspruch 3, wobei der vorbestimmte Winkel im Bereich von etwa 60 Grad bis etwa 90 Grad liegt.

5. Motorbetriebene Gehrungssäge nach Anspruch 1, wobei die benachbarten Flächen (140, 142, 144) des ersten (70) und zweiten (68) Lenkers, wenn der Führungsmechanismus in einer seiner ausgefahrenen und eingezogenen Position ist, im Allgemeinen parallel zueinander sind.

6. Motorbetriebene Gehrungssäge nach Anspruch 1, wobei der lineare Führungsmechanismus ferner ein zweites Scharnier (52) mit einem dritten und vierten Lenker (54, 56) umfasst, die schwenkbar miteinander durch eine vierte Welle (58) verbunden sind, die sich durch ausgerichtete Öffnungen darin erstreckt, wobei der dritte Lenker schwenkbar mit der Anordnung durch eine fünfte Welle (62) verbunden ist und der vierte Lenker schwenkbar mit dem Tisch durch eine sechste Welle (60) verbunden ist, wobei die vierte, fünfte und sechste Welle parallel zueinander und im Allgemeinen senkrecht zu der ersten, zweite und dritten Welle sind.

7. Motorbetriebene Gehrungssäge nach Anspruch 2, wobei der erste Lenker (70) voneinander beabstandete Endabschnitte (82, 84) mit ausgerichteten Öffnungen zur Verbindung mit dem zweiten Lenker (68) durch die erste Welle hat, wobei der zweite Lenker einen Endabschnitt (88) mit einer ausgerichteten Öffnung hat, der innerhalb der voneinander beabstandeten Endabschnitte sitzt, wobei der erste Lenker eine zweite und dritte Kontaktfläche (142, 144) auf mindestens einem der voneinander beabstandeten Endabschnitte hat.

8. Motorbetriebene Gehrungssäge nach Anspruch 1, die ferner eine Federklammer (120) zum Vorspannen des Hebels in entweder seine gesperrte Position oder eine entsperrte Position umfasst.

9. Motorbetriebene Gehrungssäge nach Anspruch 8, wobei der Schwenkabschnitt (98) des Sperrhebels (80) einen sich nach außen erstreckenden Laschenabschnitt hat, der ausgestaltet ist, um mit der Federklammer (120) in Eingriff zu kommen und den Sperrhebel in entweder seiner gesperrten oder entsperrten Position federnd zu halten.

10. Motorbetriebene Gehrungssäge nach Anspruch 9, wobei die Federklammer ein Paar voneinander beabstandeter Flügel (124) mit Öffnungen (126) darin zum Montieren der Klammer an dem ersten Lenker an der Sperrhebel-Schwenkverbindung hat.

## Revendications

1. Scie électrique à onglets (10) comprenant :
une base de scie (12) ;
une table (14) reliée à ladite base de scie de manière à pouvoir tourner ;
un ensemble bras à onglets (18) destiné au positionnement angulaire de ladite table par rapport à ladite base de scie ;
un ensemble lame et moteur de scie (30) fonctionnellement relié à ladite table ;
un mécanisme de guidage linéaire articulé à biellettes multiples (50) conçu pour supporter ledit ensemble lame et moteur de scie et permettre le mouvement dudit ensemble le long d'une trajectoire linéaire sensiblement horizontale prédéterminée entre des positions déployée et
rétractée, ledit mécanisme comprenant une première articulation (66) comportant des première (70) et deuxième (68) biellettes reliées l'une à l'autre, de manière à pouvoir pivoter, par un premier arbre (72) s'étendant à travers des ouvertures alignées s'y trouvant, ladite première biellette (70) étant reliée audit ensemble (18), de manière à pouvoir pivoter, par un deuxième arbre (76) et
ladite deuxième biellette (68) étant reliée à ladite table (14), de manière à pouvoir pivoter, par un troisième arbre (74), lesdits premier, deuxième et troisième arbres étant parallèles entre eux ;
**caractérisée en ce que** :
ladite deuxième biellette comporte au moins une patte de montage (90) s'étendant vers l'extérieur, au voisinage dudit premier arbre ;
un levier de blocage (80) comporte une poignée (94) et
une lamelle de blocage (96) à des parties d'extrémité opposées et une partie pivot (98) pourvue d'un raccord pivotant entre elles pour monter ledit levier sur ladite patte de manière à ce qu'il puisse pivoter, ladite lamelle étant conçue pour se loger à l'intérieur d'un espace entre des surfaces voisines (140, 142, 144) desdites première et deuxième biellettes, lorsque ledit mécanisme de guidage se trouve dans l'une de ses positions déployée et rétractée et que ledit levier est déplacé vers une position bloquée.

2. Scie électrique à onglets telle que définie dans la revendication 1, dans laquelle ladite lamelle de blocage (96) est allongée, présentant des premier (104) et second (106) côtés et une épaisseur maximum qui est légèrement supérieure à la largeur dudit espace, ledit premier côté entrant sensiblement en contact avec une première surface de contact (140) de ladite deuxième biellette (68) qui définit un côté dudit espace, ledit second côté (106) de ladite lamelle de blocage étant conçu pour entrer en contact avec une deuxième surface de contact (142) sur ladite première biellette (70), lorsque ledit mécanisme de guidage se trouve dans sa position rétractée et une troisième surface de contact (144) sur ladite première biellette, lorsque ledit mécanisme de guidage se trouve dans sa position déployée.

3. Scie électrique à onglets telle que définie dans la revendication 2, dans laquelle lesdites deuxième (142) et troisième (144) surfaces de contact se situent l'une par rapport à l'autre, à un angle prédéterminé tel que mesuré par rapport à l'orientation dudit premier arbre (72).

4. Scie électrique à onglets telle que définie dans la revendication 3, dans laquelle ledit angle prédéterminé se situe dans la plage d'environ 60 degrés à environ 90 degrés.

5. Scie électrique à onglets telle que définie dans la revendication 1, dans laquelle lesdites surfaces voisines (140, 142, 144) desdites première (70) et deuxième (68) biellettes, lorsque ledit mécanisme de guidage se trouve dans l'une de ses positions déployée et rétractée, sont sensiblement parallèles entre elles.

6. Scie électrique à onglets telle que définie dans la revendication 1, dans laquelle ledit mécanisme de guidage linéaire comprend en outre une seconde articulation (52) comportant des troisième et quatrième biellettes (54, 56) reliées l'une à l'autre, de manière à pouvoir pivoter, par un quatrième arbre (58) s'étendant à travers des ouvertures alignées s'y trouvant, ladite troisième biellette étant reliée audit ensemble, de manière à pouvoir pivoter, par un cinquième arbre (62) et ladite quatrième biellette étant reliée à ladite table, de manière à pouvoir pivoter, par un sixième arbre (60), lesdits quatrième, cinquième et sixième arbres étant parallèles entre eux et sensiblement perpendiculaires auxdits premier, deuxième et troisième arbres.

7. Scie électrique à onglets telle que définie dans la revendication 2, dans laquelle ladite première biellette (70) comporte des parties d'extrémité espacées (82, 84) pourvues desdites ouvertures alignées destinées au raccordement à ladite deuxième biellette (68) par ledit premier arbre, ladite deuxième biellette présentant une partie d'extrémité (88) pourvue d'une ouverture alignée, qui se loge à l'intérieur desdites parties d'extrémité espacées, ladite première biellette présentant lesdites deuxième et troisième surfaces de contact (142, 144) sur au moins l'une desdites parties d'extrémité espacées.

8. Scie électrique à onglets telle que définie dans la revendication 1, comprenant en outre une pince à ressort (120) destinée à solliciter ledit levier soit dans sa position bloquée soit dans une position débloquée.

9. Scie électrique à onglets telle que définie dans la revendication 8, dans laquelle ladite partie pivot (98) dudit levier de blocage (80) comporte une partie patte s'étendant vers l'extérieur, conçue pour coopérer avec ladite pince à ressort (120) et maintenir élastiquement ledit levier de blocage dans sa position soit bloquée soit débloquée.

10. Scie électrique à onglets telle que définie dans la revendication 9, dans laquelle ladite pince à ressort comporte une paire d'ailes de montage espacées (124) pourvues d'ouvertures (126) destinées au montage de ladite pince sur ladite première biellette, au niveau dudit raccord pivotant de levier de blocage.
